# EUROPEAN PATENT APPLICATION

(11) **EP 3 196 762 A1**
(43) Date of publication of application: **26.07.2017**
(21) Application number: 14900615.7
(22) Date of filing: 31.10.2014
(51) Int. Cl.: G06F 9/46

(54) **SHARING METHOD FOR HARDWARE COMMUNICATION APPARATUS AND TERMINAL**

(30) Priority: 25.08.2014 CN 201410423083
(71) Applicant: Yulong Computer Telecommunication Scientific (Shenzhen) Co., Ltd., Shenzhen, Guangdong 518057 (CN)
(72) Inventor: CHEN, Liwei, Shenzhen Guangdong 518057 (CN)
(74) Representative: Johnson, Richard Alan
(86) International application number: PCT/CN2014/090120
(87) International publication number: WO 2016/029545

(57) **Abstract**

Disclosed is a sharing method for a hardware communication apparatus. The sharing method for a hardware communication apparatus is applicable to a terminal having a plurality of operating systems and comprise the following steps: taking over a hardware communication apparatus by means of one of a plurality of systems; setting a queuing mechanism in the system which takes over the hardware communication apparatus; receiving data processing requests sent by the plurality of systems according to the queuing mechanism; receiving data corresponding to queuing processing data requests sent by the plurality of systems; sending, by the system which takes over the hardware communication apparatus, queuing data to be processed to the hardware communication apparatus; and processing, by the hardware communication apparatus, the data to be processed according to a queuing sequence. Also provided is a corresponding terminal. The present invention can solve the problem in the prior art that when one of a plurality of systems of a terminal occupies a hardware communication apparatus, the processing of the other systems has to be in a stopped state and the user experience of the other systems is influenced.

## Description

### TECHNICAL FIELD

The present disclosure relates to terminal technical field, and particularly to a sharing method for a hardware communication apparatus based on multiple systems, and a terminal.

### BACKGROUND

Typically, an important feature of mobile phone is the use of an open operating system such as iOS, Android, and so on. Many third party applications can be installed on such operating system platform so as to expand the function of the mobile phone. On the other hand, the installation of the third party applications can make viruses and malicious software easy to invade, and this will cause user calls, text messages, contacts and other privacy data leakage. In order to improve the security of the mobile phone, there is a kind of mobile phone of dual-operating system. This kind of mobile phone has two operating systems, among which one can be used to deal with common transactions (usually referred to as "common system"), and the other one can be used to deal with secret or private affairs (usually referred to as "security system"). Of course, there can be even more operating systems in a terminal such as mobile phone.

On the other hand, a hardware communication apparatus, such as a wireless communication apparatus arranged in the terminal, can be a Near Field Communication (NFC), WIFI, Bluetooth, or Infra-red device. The above-mentioned hardware communication apparatus is an apparatus that is independent of the main chip of the terminal. In the related art, when more than two operating systems are operated in the terminal, each operating system uses the hardware communication apparatus exclusively, which means that one system will at a stopped state while the other system using the hardware communication apparatus and this will affect user experience.

### SUMMARY

It is provided a sharing method for a hardware communication apparatus and a terminal in the present disclosure, so as to make the hardware communication apparatus can be shared among multiple systems and whereby user experience can be improved.

According to one aspect of the preset disclosure, it is provided a sharing method for a hardware communication apparatus. The method is applicable to a terminal provided with a plurality of operating systems, and includes the following steps:
taking over the hardware communication apparatus by means of one of a plurality of systems;
setting a queuing mechanism in the system which takes over the hardware communication apparatus;
receiving data processing requests sent by the plurality of systems according to the queuing mechanism;
receiving data corresponding to the queuing data processing requests sent by the plurality of systems;
sending the queuing data to the hardware communication apparatus, by the system which takes over the hardware communication apparatus; and
processing the data according to a queuing sequence, by the hardware communication apparatus.

In accordance with the queuing mechanism, the data processing requests sent by each system are queued up according to time sequence.

The plurality of systems include a security system and common systems, the security system is the system which takes over the hardware communication apparatus.

According to the queuing mechanism, the priority of the data processing request of the security system is set to be higher than the priority of the data processing request of the common systems, and the data processing request sent by the security system is set to be queued in front of the data processing request sent by common systems.

There is an arbitrating mechanism set in the system taking over the hardware communication apparatus. According to the arbitrating mechanism, maximum value of queuing data is set. Data processing requests sent by each system will no longer be received if the total amount of data to be processed by the hardware communication apparatus reaches the maximum value.

After data processing requests sent by the plurality of systems are received, the method further includes:
determining whether queuing data processing requests to be processed reach the maximum value; if yes, refusing to receive subsequent data processing requests; otherwise, receiving and queuing the subsequent data processing requests.

The method further includes: feeding data processing results of the hardware communication apparatus back to each system.

According to another aspect of the present disclosure, it is provided a terminal. The terminal is provided with a plurality of operating systems and a hardware communication unit, wherein the hardware communication unit is a hardware communication apparatus independent of the main chip of the terminal. The terminal further includes:
a taking over unit, configured to take over the hardware communication unit by means of one of the plurality of operating systems;
a setting unit, configured to set a queuing mechanism in the system which takes over the hardware communication unit;
a request receiving unit, configured to receive data processing requests sent by the plurality of systems according to the queuing mechanism;
a data processing unit, configured to receive data corresponding to the queuing data processing requests sent by the plurality of systems, and send the data to the hardware communication unit. The hardware communication unit is configured to conduct communication processing of the data according to the queuing sequence.

The terminal further includes a feedback unit, which is configured to feed back data processing results of the hardware communication apparatus to each system.

The setting unit is further configured to set an arbitrating mechanism. According to the arbitrating mechanism, maximum value of queuing data is set. No data processing request sent by each system will be received if the total amount of data to be processed by the hardware communication unit reaches the maximum value.

With aid of the sharing method for a hardware communication apparatus and the terminal, which can be applied to a shared hardware communication apparatus of a plurality of operating systems, by taking over the hardware communication apparatus by means of one system, setting a queuing mechanism in the system which takes over the hardware communication apparatus, and then receiving and queuing data processing requests sent by each system, thereafter, sending data of the data processing requests queued to the system which takes over the hardware communication apparatus such that the hardware communication apparatus can handle the data to be processed in the order they queued up, the hardware communication apparatus can be shared by a plurality of systems. Therefore, the problem that other systems cannot use the hardware communication apparatus while it is occupied by one system in the related art can be solved, and the user experience can be improved.

### BRIEF DESCRIPTION OF THE DRAWINGS

FIG. 1 is flow chart illustrating a sharing method for a hardware communication apparatus according to an embodiment of the present disclosure.
FIG. 2 is a structure block diagram illustrating a terminal according to an embodiment of the present disclosure.

### DETAILED DESCRIPTION OF ILLUSTRATED EMBODIMENTS

Technical schemes of the present disclosure will now be described with refer to embodiments and accompanying drawings.

According to an embodiment, it is provided a sharing method for a hardware communication apparatus, which can be applied to a terminal (for example, a dual-system mobile phone) provided with more than two operating systems. Take a terminal with two operating systems as an example. The two operating systems will be referred to as a first system and a second system, one of which is a security system while the other one is a common system. The terminal is provided with a hardware communication apparatus which is independent of a main chip of the terminal. The hardware communication apparatus can be a NFC, WIFI, Bluetooth, or Infra-red communication apparatus and so on.

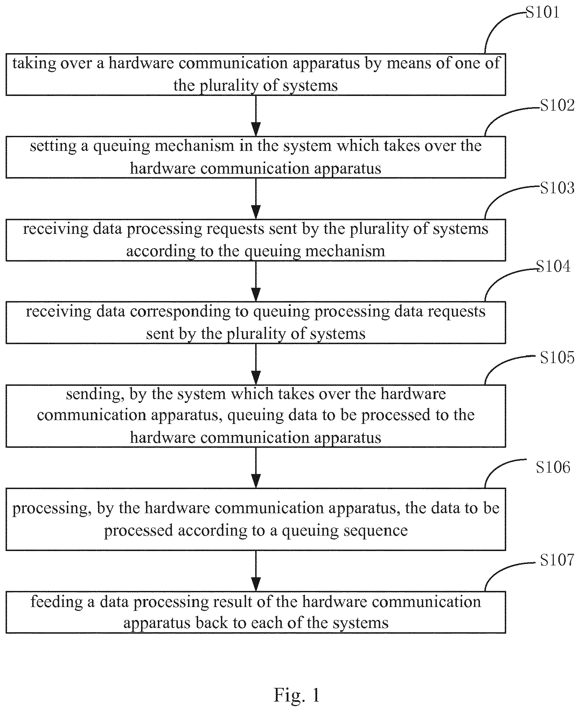

FIG. 1 is a flow chart illustrating the sharing method for a hardware communication apparatus. As shown in FIG. 1, the method can be achieved via the following operations S101-S107.
S101, the hardware communication apparatus is taken over by means of one system of a plurality of systems.
   Since the terminal is provided with two or more than two operating systems, the hardware communication apparatus can be associated with a specified operating system. Thus, the specified operating system can take over the hardware communication apparatus. In this embodiment, as one implementation, the hardware communication apparatus is taken over by the first system, and the first system can be the security system.
S102, a queuing mechanism is set in the system which takes over the hardware communication apparatus.
   In this embodiment, as illustrated above, the system which takes over the hardware communication apparatus is the first system, thus the queuing mechanism is set in the first system. Specifically, the queuing mechanism relates to queuing sequence and rule of data in the first system and the second system to be processed by the hardware communication apparatus. Data can be queued in accordance with the time sequence of data processing requests sent by each system, or, can be queued in accordance with the priority level of the two systems. For example, the priority level of the data processing request of the security system can be set to be higher than the priority level of the data processing request of the common system. Thus, the data processing request sent by the security system queues before the data processing request sent by the common system, and will be given a priority to process.
   Here, an arbitrating mechanism can be set either. For example, maximum value of queuing data to be processed can be set. When total amount of data of the two systems to be processed by the hardware communication apparatus has reached the maximum value, it means that no more data can be processed, and data processing requests sent by the first system or the second system will no longer be received.
   In accordance with the arbitrating mechanism, the order of queuing can be adjusted according to the urgency degree of the data processing request sent by the first system and the second system. For example, users can set different urgency degree for data processing request according to the urgency degree of data to be processed. Data processing requests have higher urgency degree can be queued at the front, such that they can be processed by the hardware communication apparatus first.
S103, data processing requests sent by the plurality of systems are received according to the queuing mechanism.
   Specifically, data processing requests sent by each system is received by the first system according to the queuing mechanism. After the data processing requests are received, it will be determined that whether the queue of the data processing requests to be processed is full, in other words, whether the data queued to be processed have reached the maximum value; if yes, data processing requests sent subsequently will not be accepted, otherwise, data processing requests sent subsequently will be accepted, that is, will be received and queued.
S104, data corresponding to queuing data processing requests sent by the plurality of systems is received.
   Specifically, the data corresponding to the queuing data processing requests is received by the first system. As an implementation, the data corresponding to the queuing data processing requests can be transmitted to the first system by the second system via a system channel between the first system and the second system. If there are more than two systems, data of each system to be processed can be transmitted in a similar manner to the system which takes over the hardware communication apparatus.
S105, the queuing data received at S104 and to be processed is transmitted to the hardware communication apparatus by the system which takes over the hardware communication apparatus.
   In this embodiment, the hardware communication apparatus is taken over by the first system, thus data of each system to be processed can be transmitted to the hardware communication apparatus by the first system.
S106, the data received at S105 is processed according to a queuing sequence by the hardware communication apparatus.

Specifically, the hardware communication apparatus can process the data received according to the queuing sequence, for example, use NFC, WIFI, Bluetooth or Infra-red, and other communication methods for data interaction.

As shown in FIG. 1, the method can further includes S107, that is, after the operation of S106, data processing results of the hardware communication apparatus is returned to each system respectively.

With aid of the sharing method for a hardware communication apparatus, which can be applied to a shared hardware communication apparatus of a plurality of operating systems, by taking over the hardware communication apparatus by means of one system, setting a queuing mechanism in the system which takes over the hardware communication apparatus, and then receiving and queuing data processing requests sent by each system, thereafter, sending data of the data processing requests queued to the system which takes over the hardware communication apparatus such that the hardware communication apparatus can handle the data to be processed in the order they queued up, the hardware communication apparatus can be shared by a plurality of systems. Therefore, the problem that other systems cannot use the hardware communication apparatus while it is occupied by one system in the related art can be solved, and the use experience of the user can be improved.

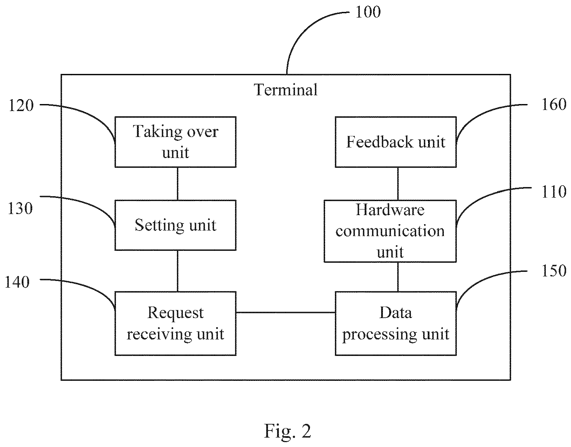

According to another embodiment of the present disclosure, it is provided a terminal. As shown in FIG.2, a terminal 100 is provided with two or more than two systems. These systems include a security system and common systems (can be referred to as a first system and a second system respectively in the following). The terminal 100 can be a dual-system mobile phone for example. The terminal 100 includes a hardware communication unit 110, a taking over unit 120, a setting unit 130, a request receiving unit 140, a data processing unit 150, and a feedback unit 160.

The hardware communication unit 110 is configured to conduct communication processing of data. The hardware communication unit 110 is a hardware communication apparatus which is independent of a main chip of the terminal, for example, it can be a NFC, WIFI, Bluetooth, or Infra-red communication apparatus arranged in the terminal.

The taking over unit 120 is configured to take over the hardware communication unit 110 by means of one of a plurality of systems of the terminal 100.

Since two or more operating systems are provided in the terminal 100, the hardware communication unit 110 can be associated with a specified system, and the specified system will take over the hardware communication unit 110. In this embodiment, as an implementation, the security system will take over the hardware communication unit 110.

The setting unit 130 is configured to set a queuing mechanism in the system which takes over the hardware communication apparatus (that is, in the security system). Specifically, the queuing mechanism is set for the data to be processed, in more concrete terms, queuing sequence and rule of data to be processed by the hardware communication apparatus is set. For example, data can be queued in accordance with the time sequence of data processing requests sent by each system, or, can be queued in accordance with the priority level of the two systems. For example, the priority level of the data processing request of the security system can be set to be higher than the priority level of the data processing request of the common system, and the data processing request sent by the security system will be processed first.

The setting unit 130 can set an arbitrating mechanism either. For example, the total amount of queuing data to be processed can be preset. When the total amount of data of the two systems to be processed by the hardware communication apparatus has reached the preset total amount, it means that no more data can be processed, and data processing requests sent by the first system and the second system will no longer be received. In accordance with the arbitrating mechanism, the order of queuing can be adjusted according to the urgency degree of the data processing request sent by the first system and the second system. For example, users can set different urgency degree for data processing request according to the urgency degree of data to be processed. Data processing requests which have higher urgency degree can be queued at the front, such that they can be processed by the hardware communication apparatus first.

The request receiving unit 140 is configured to receive, according to the queuing mechanism, data processing requests sent by the plurality of systems.

Specifically, after data processing requests sent by each system is received, it will be determined that whether the queue of data processing requests to be processed is full, in other words, whether the data queued to be processed have reach the maximum value; if yes, data processing requests sent subsequently will not be accepted, otherwise, data processing requests sent subsequently will be accepted, that is, will be received and queued.

The data processing unit 150 is configured to receive data corresponding to queuing data processing requests sent by the plurality of systems, and send the data received to the hardware communication unit 110, such that the hardware communication unit 110 will process the data.

Specifically, the data processing unit 150 can receive the data via a system channel between the first system and the second system. Other systems other than the first system and the second system can transmit data thereof to the system which takes over the hardware communication unit 110.

The feedback unit 160 is configured to feed back data processing results to each system after the data is processed by the hardware communication unit 110.

After the queuing data is processed by the hardware communication unit 110, the feedback unit 160 can feed back the processing result to the system corresponding to the data being processed.

By means of the technical schemes described above, a hardware communication unit can be shared by a plurality of systems. By taking over the hardware communication unit by means of one system, setting a queuing mechanism in the system which takes over the hardware communication unit, and then receiving and queuing data processing requests sent by each system, thereafter, sending data of the data processing requests queued to the system which takes over the hardware communication unit such that the hardware communication unit can handle the data to be processed in the order they queued up, and the hardware communication unit can be shared by a plurality of systems. Therefore, the problem that other systems cannot use the hardware communication unit while it is occupied by one system in the related art can be solved, and the use experience of the user can be improved.

A person skilled in the art should be noted that, all or a part of the steps described above can be completed by means of hardware, or can be completed by means of hardware instructed by related programs. The programs can be stored in a computer readable storage medium, which can be Read Only Memory (ROM), disk, or CD.

The foregoing descriptions are merely preferred embodiments of the present disclosure, rather than limiting the present disclosure. Various modifications and alterations may be made to the present disclosure for those skilled in the art. Any modification, equivalent substitution, improvement or the like made within the spirit and principle of the present disclosure shall fall into the protection scope of the present disclosure.

## Claims

1. A sharing method for a hardware communication apparatus, wherein the method is applicable to a terminal provided with a plurality of operating systems and comprises:
taking over a hardware communication apparatus by means of one of the plurality of systems;
setting a queuing mechanism in the system which takes over the hardware communication apparatus;
receiving data processing requests sent by the plurality of systems according to the queuing mechanism;
receiving data corresponding to the data processing requests sent by the plurality of systems;
sending the data received to the hardware communication apparatus, by the system which takes over the hardware communication apparatus; and
processing the data according to a queuing sequence, by the hardware communication apparatus.

2. The method of claim 1, wherein according to the queuing mechanism, the data processing requests sent by each system are queued up according to time sequence.

3. The method of claim 1, wherein the plurality of operating systems comprise a security system and common systems, wherein the system which takes over the hardware communication apparatus is the security system.

4. The method of claim 3, wherein according to the queuing mechanism, the priority of the data processing requests of the security system is higher than the priority of the data processing requests of the common systems, and the data processing requests sent by the security system are queued in front of the data processing requests sent by common systems.

5. The method of claim 1, wherein the method further comprises:
setting an arbitrating mechanism in the system taking over the hardware communication apparatus; and
according to the arbitrating mechanism, maximum value of queuing data is set, and no data processing request sent by each system will be received if total amount of data to be processed by the hardware communication apparatus reaches the maximum value.

6. The method of claim 5, wherein after receiving the data processing requests sent by each system, the method further comprises:
determining whether queuing data processing requests to be processed reach the maximum value; if yes, refusing to receive subsequent data processing requests; otherwise, receiving and queuing the subsequent data processing requests.

7. The method of claim 1, wherein the method further comprises:
feeding data processing results of the hardware communication apparatus back to each system.

8. A terminal provided with a plurality of operating systems and a hardware communication unit, wherein the hardware communication unit is a hardware communication apparatus independent of the main chip of the terminal, the terminal comprises:
a taking over unit, configured to take over the hardware communication unit by means of one of the plurality of operating systems;
a setting unit, configured to set a queuing mechanism in the system which takes over the hardware communication unit;
a request receiving unit, configured to receive data processing requests sent by the plurality of systems according to the queuing mechanism; and
a data processing unit, configured to receive data corresponding to the data processing requests sent by the plurality of systems, and send the data to the hardware communication unit; and
the hardware communication unit is configured to conduct communication processing of the data according to the queuing sequence.

9. The terminal of claim 8, wherein the terminal further comprises a feedback unit, which is configured to feed back data processing results of the hardware communication apparatus to each system.

10. The terminal of claim 8, wherein the setting unit is further configured to set an arbitrating mechanism; according to the arbitrating mechanism, maximum value of queuing data is set, and no data processing request sent by each system will be received if the total amount of data to be processed by the hardware communication unit reaches the maximum value.
